(19) Europäisches Patentamt
European Patent Office
Office européen des brevets

(11) **EP 4 359 598 B1**

(12) **FASCICULE DE BREVET EUROPÉEN**

(45) Date de publication et mention
de la délivrance du brevet:
**06.08.2025 Bulletin 2025/32**

(21) Numéro de dépôt: **22743528.6**

(22) Date de dépôt: **23.06.2022**

(51) Classification Internationale des Brevets (IPC):
**D03D 11/02** *(2006.01)*      **D03D 7/00** *(2006.01)*
**B29C 70/00** *(2006.01)*

(52) Classification Coopérative des Brevets (CPC):
**D03D 11/02; B32B 5/06; B32B 5/245; B32B 5/26;**
**D03D 7/00; D03D 15/67;** D10B 2403/021;
D10B 2403/0241; D10B 2505/02; E04C 2/049

(86) Numéro de dépôt international:
**PCT/FR2022/051235**

(87) Numéro de publication internationale:
**WO 2022/269202 (29.12.2022 Gazette 2022/52)**

(54) **PANNEAU COMPRENANT DEUX FACES RELIÉES PAR UNE STRUCTURE DE LIAISON UNIFORME**

PANEEL MIT ZWEI DURCH EINE GLEICHFÖRMIGE VERBINDUNGSSTRUKTUR VERBUNDENEN FLÄCHEN

PANEL COMPRISING TWO FACES LINKED BY A UNIFORM CONNECTING STRUCTURE

(84) Etats contractants désignés:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorité: **24.06.2021 FR 2106787**

(43) Date de publication de la demande:
**01.05.2024 Bulletin 2024/18**

(73) Titulaire: **COMPAGNIE GENERALE DES**
**ETABLISSEMENTS MICHELIN**
**63000 Clermont-Ferrand (FR)**

(72) Inventeurs:
• **LIMOZIN, Bastien**
**63040 CLERMONT-FERRAND Cedex 9 (FR)**
• **LE CLERC, Christophe**
**63040 CLERMONT-FERRAND Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**DE-A1- 2 855 194      US-A1- 2003 106 346**

## Description

### Domaine technique de l'invention

L'invention a pour objet un panneau comprenant deux tissus reliés par une structure porteuse ainsi que l'utilisation de tels panneaux comme matériau de construction.

### Art antérieur

De multiples panneaux sont utilisés dans le domaine de la construction. Parmi ceux-ci on peut citer les panneaux de structure comme des panneaux de béton ou des panneaux de plâtres, ou bien des panneaux isolant tels que par exemple des panneaux polyuréthane, en laine de roche, en fibre de bois.

Ces panneaux peuvent être constitués d'un seul type de matériau, par exemple du plâtre, et sont alors souvent qualifiés de « massifs ». Ils peuvent également être constitués de plusieurs matériaux distincts et assemblés en vue d'améliorer une ou plusieurs qualités spécifiques et sont alors souvent qualifiés de « composites ».

Le document US2017/0044766 décrit ainsi un revêtement de sol composite constitué d'un tissu dit « 3D » comprenant deux faces textiles planes reliées par des éléments d'espacement qui maintiennent à distance et parallèles les deux faces, ce tissu 3D étant sous forme d'un maillage à travers lequel un ciment peut être coulé afin de réaliser un sol renforcé. Cette structure doit être posée sur un support horizontal, le panneau ne pouvant contenir le matériau de remplissage.

Le document WO2019/197319 décrit un matériau composite constitué d'un tissu 3D comprenant deux faces dont l'écartement est régulé par des espaceurs et d'une mousse polyuréthane, ce matériau étant destiné à former une semelle de chaussure, les espaceurs assurant une fonction de tenue mécanique en maintenant l'espace entre les deux faces du tissu, ce qui permet de résister aux écrasements successifs subits par la semelle.

Les documents US2010/0233417 et WO2015/053842 décrivent un composite textile flexible pouvant « prendre » (de la manière dont un ciment « prend »), c'est-à-dire pouvant devenir rigide ou semi-rigide par application d'un liquide ou d'une radiation, ce composite étant constitué d'un tissu 3D comprenant deux faces planes et des espaceurs et contenant une poudre. La poudre est incorporée par l'une des faces du tissu, cette face pouvant se déformer pour créer les espaces nécessaires à l'incorporation de ladite poudre et se rétracter pour la contenir, la ou les faces du tissu étant par ailleurs perméables au liquide ou radiations nécessaires à la prise de la poudre afin de rigidifier le composite. Les faces sont maintenues à distance l'une de l'autre par les espaceurs qui peuvent être individuellement constitués par un groupe de fibre, ou un monofilament. Bien que, selon US2010/0233417 il n'y ait théoriquement aucune limite à l'épaisseur du composite, les contraintes énumérées, et notamment la capacité pour le liquide de pénétrer au cœur du matériau poudreux avant que les parties extérieures n'aient durcies, la capacité des faces à supporter le poids de la poudre ainsi que les contraintes de rigidité sur les espaceurs pour qu'ils puissent correctement remplir leur fonction de maintien de l'espace entre les deux faces internes du composite limitent ces composites à des épaisseurs relativement faibles, typiquement de l'ordre de quelques millimètres comme montré dans les exemples de typiquement, comme montré dans les exemples de WO2015/053842.

Le document WO2015/187826 décrit un composite textile comprenant une étoffe intissée dont une face est perméable au liquide et l'autre face imperméable, l'étoffe étant remplie d'un matériau pouvant se rigidifier au contact du liquide. Les deux faces de l'étoffe sont séparées par un ensemble de fibres auto-portées, c'est-à-dire qui dans leur ensemble maintiennent l'espacement entre les deux faces et résistent aux forces mécaniques d'écrasement. Lorsque ce composite est courbé, avant que le matériau de remplissage ne durcisse, des plis se forment à sa surface.

Le développement de matériaux expansés tels que les mousse cimentaires ne peuvent toutefois pas être mis en œuvre dans de tels composites qui soit comprennent des matériaux cimentaires sous forme sèche et divisée, soit ne peuvent retenir un matériau fluide.

Le document DE 28 55 194 décrit un panneau pouvant comprendre des matériaux divisés tels que du ciment, ou des mousses de tels matériaux. Cependant, les espaceurs du matériau décrit dans ce documents doivent être rigides, suffisamment pour maintenir l'écart entre les deux faces du tissu.

Pour répondre à ces besoins, la demanderesse a développé un panneau présentant un premier tissu, un deuxième tissu relié au premier tissu par une structure de liaison, rempli d'un matériau de remplissage qui est une mousse cimentaire.

### Définitions

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

Par « sensiblement parallèle » ou « s'étendant sensiblement selon », on entend que l'angle formé par les deux directions en question est inférieur à 10°, de préférence inférieur à 5°, de manière préférée inférieur à 2° et de manière très préférée inférieur ou égal à l'erreur de mesure de l'angle par une méthode adaptée.

Deux longueurs sont sensiblement égales si elles sont égales, à la tolérance de mesure usuellement utilisée pour mesurer de telles longueurs près ou à la tolérance du procédé de fabrication utilisant ces éléments sensiblement de même longueur.

Un tissu est dit non déformable si les éléments filaires qui le composent présentent un allongement à la rupture inférieur à 50%, préférentiellement inférieur à 30%, et de manière préférée inférieur à 20%. Le tissu peut toutefois se déformer par glissement mécanique des éléments filaires les uns sur les autres.

## Panneau de tissu

L'invention concerne un panneau comprenant :

- un premier tissu comprenant des éléments filaires (C1), dits de chaîne, sensiblement parallèles entre eux et s'étendant selon une direction dite de chaine, constituant une première direction principale du premier tissu, des éléments filaires (T1), dits de trame, sensiblement parallèles entre eux et s'étendant selon une direction dite de trame, constituant une deuxième direction principale du premier tissu et différente de la première direction principale du premier tissu ;
- un deuxième tissu comprenant des éléments filaires (C2), dits de chaîne, sensiblement parallèles entre eux et s'étendant selon une direction dite de chaine, constituant une première direction principale du deuxième tissu, des deuxièmes éléments filaires (T2), dits de trame, sensiblement parallèles entre eux et s'étendant selon une direction dite de trame, constituant une deuxième direction principale du deuxième tissu, différente de la première direction principale du deuxième tissu ;
- une structure de liaison comprenant n éléments filaires reliant le premier tissu au deuxième tissu, chaque élément filaire comprenant au moins une portion filaire, dite hauban, s'étendant entre le premier et le deuxième tissu et reliant le premier tissu au deuxième tissu, chaque hauban i ayant une longueur au repos hi et s'étendant d'un point d'attache au premier tissu vers un point d'attache au deuxième tissu ;

caractérisé en ce que chaque hauban de la structure de liaison présente une longueur au repos sensiblement égale à la moyenne des longueurs au repos $\overline{h_m}$ des haubans, m représentant le nombre total de haubans de la structure de liaison, en ce que le premier et le deuxième tissus sont non déformables et en ce que le panneau comprend, entre la face interne du premier tissu et la face interne du deuxième tissu, un matériau de remplissage, ledit matériau de remplissage étant une mousse cimentaire.

Par moyenne des longueurs au repos $\overline{h_m}$ des haubans, on entend la moyenne des longueurs au repos des haubans de la structure de liaison, le nombre total de haubans de la structure de liaison du panneau selon l'invention étant égal à m, nombre entier strictement supérieur à 0. Ainsi, $\overline{h_m} = \frac{1}{m} \sum_{i=1}^{m} h_i$. Le nombre total de haubans est ajusté en fonction de la géométrie du panneau, de l'effet de rigidité recherché, ainsi que des caractéristiques de fluidité du matériau de remplissage. Les allongements à rupture des éléments filaires sont mesurés selon la norme ASTM D885-03.

## Matériau de remplissage

Le panneau selon l'invention comprend, entre la face interne du premier tissu et la face interne du deuxième tissu, un matériau de remplissage, ce matériau étant de la mousse cimentaire.

Les mousses cimentaires, ou mousses minérales isolantes, sont bien connues de l'homme du métier et sont constituées d'un mélange d'un matériau cimentaire et d'un gaz. Le gaz, par exemple de l'air, est emprisonné dans le matériau cimentaire sous forme de bulles, formant ainsi un matériau expansé présentant d'excellentes propriétés d'isolation thermique et/ou acoustique, de résistance au feu, avec une large gamme de densités possibles, pouvant aller par exemple de l'ordre de 40 à plus de 1000 kg/m³. De tels matériaux sont disponibles commercialement, par exemple par la société Lafarge Holcim sous la marque « Airium » ou par la société Vicat sous la marque « Aircimat ».

## Tissus du panneau selon l'invention

Le premier tissu du panneau selon l'invention comprend des éléments filaires (C1), dits de chaîne, sensiblement parallèles entre eux et s'étendant selon une direction dite de chaine, constituant une première direction principale du premier tissu, des éléments filaires (T1), dits de trame, sensiblement parallèles entre eux et s'étendant selon une direction dite de trame, constituant une deuxième direction principale du premier tissu et différente de la première direction principale du premier tissu.

De manière préférée, le premier et deuxième tissu comprennent, indépendamment l'un de l'autre, un matériau choisi parmi un polyester, un polyamide, une polycétone, un polyuréthane, une fibre naturelle, une fibre minérale et un assemblage de ces matériaux, de préférence choisi parmi un polyester, un polyamide, une polycétone, un polyuréthane, une fibre naturelle et un assemblage de ces matériaux, plus préférentiellement choisi parmi un polyester, une fibre naturelle et un assemblage de ces matériaux.

Dans un arrangement préféré, au moins un des tissus comprend un matériau ignifuge, par sa nature ou par un traitement d'ignifugation.

## Structure de liaison

Le panneau selon l'invention comprend une structure de liaison comprenant des éléments filaires reliant le premier tissu au deuxième tissu, chaque élément filaire comprenant au moins une portion filaire, dite hauban, s'étendant entre le premier et le deuxième tissu et reliant le premier tissu au deuxième tissu, chaque hauban i ayant une longueur au repos $h_i$ et s'étendant d'un point d'attache au premier tissu vers un point d'attache au deuxième tissu, chaque hauban de la structure de liaison présentant une longueur au repos sensiblement égale à la longueur au repos moyenne $\overline{h_m}$ des haubans.

Par longueur au repos du hauban, on entend la longueur du hauban selon la direction longitudinale en l'absence de toute contrainte extérieure exercée sur le hauban (autre que la pression atmosphérique). Un hauban au repos selon sa direction longitudinale n'est ni en extension ni en compression selon cette direction et présente donc un allongement nul selon cette direction. De même et de manière générale, par longueur au repos d'un élément filaire, on entend la longueur de l'élément filaire selon sa direction longitudinale en l'absence de toute contrainte extérieure exercée sur l'élément filaire (autre que la pression atmosphérique).

Par élément filaire, on entend tout élément longiligne de grande longueur relativement à sa section transversale, quelle que soit la forme de cette dernière, par exemple circulaire, oblongue, rectangulaire ou carrée, ou même plate, cet élément filaire pouvant être par exemple torsadé ou ondulé. Lorsque sa section transversale est de forme circulaire, le diamètre de cette section est de préférence inférieur à 5 mm, plus préférentiellement compris dans un domaine allant de 100 $\mu$m à 1,2 mm.

Chaque élément filaire de la structure de liaison, notamment chaque hauban qui relie les faces internes des premier et deuxième tissus l'un à l'autre, peut être caractérisée géométriquement par sa longueur au repos LP et par sa section moyenne SP, qui est la moyenne des sections obtenues par la coupe du hauban par toutes les surfaces parallèles aux premier et deuxième tissu et comprises entre les premier et deuxième tissus. Dans le cas le plus fréquent d'une section constante de l'élément filaire et du hauban, la section moyenne SP est égale à cette section constante.

Chaque élément filaire de la structure de liaison, notamment chaque hauban, présente typiquement une plus petite dimension caractéristique E de sa section moyenne SP, préférentiellement au plus égale à 0.02 fois la longueur au repos moyenne $\overline{h_m}$ des haubans et un rapport de forme R de sa section moyenne SP préférentiellement au plus égal à 3. Une plus petite dimension caractéristique E de la section moyenne SP de l'élément porteur au plus égale à 0.02 fois la longueur au repos moyenne $\overline{h_m}$ des haubans exclut tout élément porteur massif, ayant un volume important.

Un rapport de forme R de sa section moyenne SP au plus égal à 3 signifie que la plus grande dimension caractéristique V de sa section moyenne SP est au plus égale à 3 fois la plus petite dimension caractéristique E de sa section moyenne SP. À titre d'exemples, une section moyenne SP circulaire, ayant un diamètre égal à d, a un rapport de forme R=1, une section moyenne SP rectangulaire, ayant une longueur V et une largeur V', a un rapport de forme R=V/V', et une section moyenne SP elliptique, ayant un grand axe B et un petit axe B', a un rapport de forme R=B/B'.

La longueur au repos moyenne $\overline{h_m}$ des haubans est préférentiellement supérieure à 8 mm, de manière préférée comprise entre 10 et 2000 mm, préférentiellement comprise entre 10 et 1000 mm, préférentiellement comprise entre 10 et 500 mm, très préférentiellement comprise entre 30 et 100 mm, de manière très préférée comprise entre 40 et 70 mm. Cette longueur au repos moyenne peut être ajustée en fonction de la destination d'usage du panneau selon l'invention.

Un hauban a un comportement mécanique de type filaire, c'est-à-dire qu'il ne peut être soumis qu'à des efforts d'extension ou de compression selon sa ligne moyenne. Chaque hauban de la structure de liaison est flexible. C'est-à-dire qu'il peut plier sans rompre ni se déformer plastiquement. La structure de liaison est telle qu'elle ne peut supporter à elle seule l'espacement entre les deux faces du panneau selon l'invention. Sans remplissage, ni pression interne, les deux faces peuvent se rapprocher l'une de l'autre sans effort.

Dans un mode de réalisation préféré, chaque élément filaire de la structure de liaison est textile. Par textile, on entend que chaque élément filaire de la structure de liaison est non métallique, par exemple réalisé dans un matériau choisi parmi un polyester, un polyamide, une polycétone, un alcool polyvinylique, une cellulose, une fibre minérale, une fibre naturelle, un matériau élastomérique ou un mélange de ces matériaux. Parmi les polyesters on citera par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate). Parmi les polyamides, on citera les polyamides aliphatiques tels que les polyamides 4-6, 6, 6-6 (nylon), 11 ou 12 et les polyamides aromatiques tels que l'aramide.

Par exemple, chaque élément filaire de la structure de liaison est un assemblage textile comprenant une ou plusieurs fibres mono-filamentaire ou multi-filamentaires textiles, retordues ensemble ou non. Ainsi, dans un mode de réalisation, on pourra avoir un assemblage dans lequel les fibres sont sensiblement parallèles les unes aux autres. Dans un autre mode de réalisation, on pourra avoir également un assemblage dans lequel les fibres sont enroulées en hélice tel qu'un retors ou un surtors. Dans encore un autre mode de réalisation, chaque élément filaire est constitué d'un monofilament. Chaque fibre mono-filamentaire ou multi-filamentaire présente un diamètre pouvant aller de quelques centièmes de millimètres à quelques millimètres, typiquement compris entre 0,001 et 5 mm, préférentiellement compris entre 5 et 50 μm, préférentiellement compris entre 10 et 40 μm.

Dans un arrangement préféré, chaque élément filaire de la structure de liaison est une fibre textile multifilamentaire, chaque fibrille constituant la fibre textile présentant un diamètre compris entre 0,001 et 0,5 mm, préférentiellement compris entre 5 et 50 μm, préférentiellement compris entre 10 et 40 μm. De tels éléments filaires ont pour avantage d'être plus flexibles que des éléments filaires monofilamentaires. Le tissu selon l'invention comprenant de tels éléments filaires peut ainsi être stocké de manière très compacte en rapprochant les faces internes du premier tissu et du deuxième tissu l'une de l'autre. De manière préférée dans cet arrangement, les éléments filaires sont agencés de telle sorte que les haubans ne puissent maintenir, à eux seuls, l'espacement entre les faces internes des deux tissus lorsque le panneau est soumis à un effort de compression, c'est-à-dire à une force exercée sur le panneau perpendiculairement à sa surface et dans sa direction. Cet agencement est obtenu en ajustant la densité de haubans, exprimée en nombre de haubans par mètre carré, et/ou en ajustant la souplesse des haubans par l'intermédiaire du titre ou de la nature chimique des éléments filaires. Toutefois, les haubans devront présenter une résistance suffisante pour maintenir l'espacement entre les deux faces internes des tissus une fois le matériau de remplissage introduit entre les deux faces internes du panneau selon l'invention en résistant à la pression induite par l'introduction du matériau de remplissage, c'est-à-dire en présentant une résistance à l'extension suffisante. Cette résistance peut être ajustée par la densité des haubans et/ou leur ténacité et/ou leur nature chimique.

Dans un autre mode de réalisation, chaque élément filaire de la structure de liaison est métallique, par exemple un monofilament métallique ou un assemblage de monofilaments métalliques, chaque monofilament métallique présentant un diamètre pouvant aller de quelques centièmes de millimètres à quelques millimètres, typiquement compris entre 0,01 et 5 mm. Dans un mode de réalisation, chaque élément filaire de la structure de liaison est constitué d'un assemblage de plusieurs monofilaments métalliques. Dans un autre mode de réalisation, chaque élément filaire est constitué d'un monofilament métallique.

Dans un mode de réalisation, chaque élément filaire de la structure de liaison s'étend alternativement du premier tissu vers le deuxième tissu et du deuxième tissu vers le premier tissu lorsqu'on se déplace le long de l'élément filaire.

Dans un mode de réalisation, chaque élément filaire de la structure de liaison comprend une première portion filaire d'ancrage de chaque élément filaire de la structure de liaison dans le premier tissu prolongeant le hauban dans le premier tissu.

Préférentiellement, chaque première portion filaire d'ancrage est entrelacée avec le premier tissu. Un tel assemblage présente l'avantage de pouvoir être fabriqué en une seule étape. Toutefois, il est également possible d'envisager de fabriquer le panneau selon l'invention en deux étapes, une première étape de fabrication du premier tissu et une deuxième étape d'entrelacement du ou des éléments filaires de la structure de liaison avec le premier tissu. Dans les deux cas, l'entrelacement de chaque élément filaire de la structure de liaison avec le premier tissu permet d'assurer l'ancrage mécanique de chaque élément filaire de la structure de liaison dans le premier tissu et ainsi de conférer les propriétés mécaniques souhaitées à la structure de liaison.

Dans un mode de réalisation, afin d'assurer l'ancrage mécanique de la portion filaire d'ancrage, chaque première portion filaire d'ancrage est enroulée au moins en partie autour d'au moins un élément filaire du premier tissu.

De manière préférée, le premier tissu comprend :

- des éléments filaires, dits de chaine, sensiblement parallèles entre eux et s'étendant selon une direction, dite de chaine, sensiblement parallèle à la première direction principale du premier tissu, et
- des éléments filaires, dits de trame, sensiblement parallèles entre eux et s'étendant selon une direction, dite de trame, et s'entrecroisant avec les éléments filaires de chaine, chaque première portion filaire d'ancrage étant enroulée au moins en partie autour d'au moins un élément filaire de trame du premier tissu, de préférence autour d'au moins deux éléments filaire de trame adjacents selon la première direction principale du premier tissu.

Dans un mode de réalisation, chaque première portion filaire d'ancrage s'étend selon une direction sensiblement parallèle à la première direction principale du premier tissu.

De préférence, chaque première portion filaire d'ancrage passe alternativement d'une face du premier tissu à l'autre face du premier tissu entre deux éléments filaires de trame adjacents autour desquels la première portion filaire d'ancrage s'enroule.

De manière préférée, au moins un des premier tissu et deuxième tissu, est agencé de sorte à être étanche au matériau de remplissage. Ainsi, le matériau de remplissage ne peut fluer à travers le tissu agencé de manière à être étanche audit matériau. De manière préférée, les deux tissus du panneau selon l'invention sont agencés de manière à être étanches au matériau de remplissage.

## Fabrication du panneau

Dans une étape de formation de la partie tissu tridimensionnelle du panneau selon l'invention, on assemble les premiers éléments filaires 64, 66 de façon à former le premier tissu 26 et les deuxièmes éléments filaires 68, 70 de façon à former le deuxième tissu 28. On assemble également les éléments porteurs, éventuellement revêtus d'une composition adhésive, préférentiellement réticulée, 32 avec les premier et deuxième tissus 26, 28. Dans le mode de réalisation décrit en exemple, on assemble en une seule étape, et donc simultanément, les premiers et deuxièmes éléments filaires 64, 66, 68, 70 avec les éléments porteurs 32 de façon à former la partie tissu tridimensionnelle du panneau 24. Dans un autre mode de réalisation, on forme tout d'abord séparément chaque premier et deuxième tissu 26, 28, puis on relie entre eux les premier et deuxième tissus 26, 28 avec les éléments porteurs éventuellement revêtus d'une composition adhésive, préférentiellement réticulée, 32. L'étape de formation du tissu du panneau 24 selon l'invention est mise en œuvre d'une façon connue par l'homme du métier des tissus tramés.

On injecte ensuite la mousse cimentaire par au moins une extrémité du panneau ainsi constitué.

Ainsi, l'invention concerne également un procédé de fabrication d'un panneau tel que décrit dans la présente comprenant au moins les étapes suivantes :

- Disposer sur une surface un tissu tridimensionnel comprenant :

  ○ un premier tissu comprenant des éléments filaires (C1), dits de chaîne, sensiblement parallèles entre eux et s'étendant selon une direction dite de chaine, constituant une première direction principale du premier tissu, des éléments filaires (T1), dits de trame, sensiblement parallèles entre eux et s'étendant selon une direction dite de trame, constituant une deuxième direction principale du premier tissu et différente de la première direction principale du premier tissu ;
  ○ un deuxième tissu comprenant des éléments filaires (C2), dits de chaîne, sensiblement parallèles entre eux et s'étendant selon une direction dite de chaine, constituant une première direction principale du deuxième tissu, des deuxièmes éléments filaires (T2), dits de trame, sensiblement parallèles entre eux et s'étendant selon une direction dite de trame, constituant une deuxième direction principale du deuxième tissu, différente de la première direction principale du deuxième tissu ;
  ○ une structure de liaison comprenant n éléments filaires reliant le premier tissu au deuxième tissu, chaque élément filaire comprenant au moins une portion filaire, dite hauban, s'étendant entre le premier et le deuxième tissu et reliant le premier tissu au deuxième tissu, chaque hauban i ayant une longueur au repos hi et s'étendant d'un point d'attache au premier tissu vers un point d'attache au deuxième tissu, chaque hauban de la structure de liaison présente une longueur au repos sensiblement égale à la moyenne des longueurs au repos $\overline{h_m}$ des haubans, et en ce que le premier et le deuxième tissus sont non déformables ;

- injecter par au moins une extrémité dudit panneau entre la face interne du premier tissu et la face interne du deuxième tissu un matériau de remplissage, ledit matériau de remplissage étant une mousse cimentaire.

L'injection du matériau de remplissage peut être réalisée de multiples façons. Par exemple, on peut injecter par au moins l'une des extrémités du tissu tridimensionnel la mousse cimentaire au moyen d'une ou plusieurs buses, la mousse s'écoulant progressivement au sein du tissu tridimensionnel soit par gravité, soit en étant « poussée » par le flux de mousse.

On peut également introduire des canules au sein du tissu tridimensionnel, ces canules étant progressivement retirées au fur et à mesure de l'injection de mousse dans le tissu tridimensionnel.

## Assemblage

L'invention concerne également un assemblage comprenant au moins un panneau selon l'invention. Un assemblage est un ensemble pouvant regrouper tout élément dont au moins un panneau selon l'invention. Un tel assemblage peut être par exemple et sans être limitatif un bâtiment tel qu'un entrepôt, un immeuble, une maison, un aéronef, un bateau ou un véhicule terrestre. Cet assemblage peut également être une gaine, un conduit ou un contenant.

## Description des figures

[Fig 1] Vue du dessus du panneau selon l'invention.
[Fig 2] Vue en coupe du panneau selon l'invention selon le plan de coupe P-P' représenté sur la figure 1.

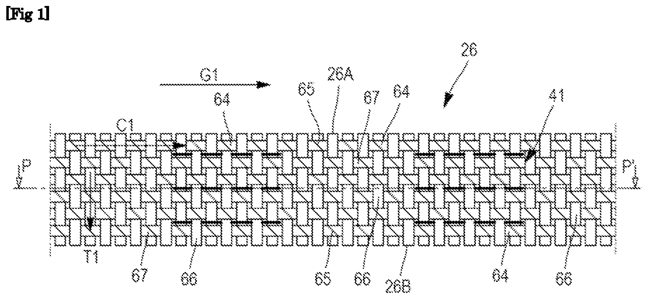

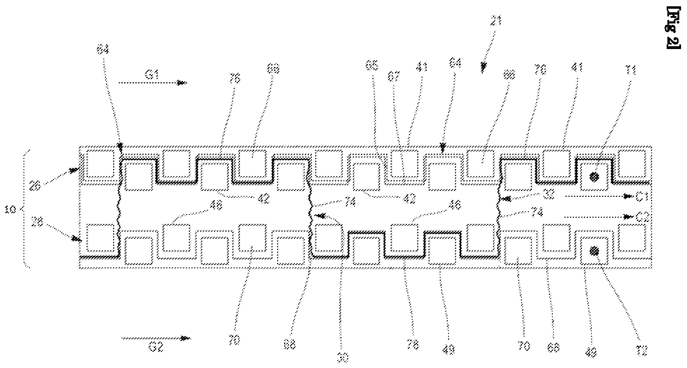

On représente sur la figure 1 une vue du dessus d'un panneau (10) selon l'invention et sur la figure 2 une vue schématique d'une coupe transversale d'un panneau (10). Sur ces deux figures, les mêmes éléments sont numérotés de la même façon.

Le premier tissu 26 comprend deux bords longitudinaux 26A et 26B. Le premier tissu 26 s'étend selon une première direction principale du premier tissu G1 sensiblement parallèle à chaque bord longitudinal 26A, 26B. Le premier tissu 26 comprend des éléments filaires 64, appelés éléments filaires de chaine, et des éléments filaires 66, appelés éléments filaires de trame. Les éléments filaires de chaine 64 du premier tissu 26 sont sensiblement parallèles entre eux et s'étendent selon une direction dite de chaine C1, sensiblement parallèle à la première direction principale G1. Les éléments filaires de trame 66 du premier tissu 26 sont sensiblement parallèles entre eux et s'étendent selon une direction dite de trame T1 et s'entrecroisent avec les éléments filaires de chaine 64. Les éléments filaires de chaine 64 s'étendent continûment sur toute la longueur du premier tissu 26.

Chaque élément filaire 64, 66, est ici, par exemple, un élément filaire textile.

Les éléments filaires 64 sont tous sensiblement identiques. Chaque élément filaire 64 de chaine comprend des premier et deuxième organes filaires 65, 67. Le deuxième organe filaire 67 est sensiblement rectiligne et le premier organe filaire 65 est enroulé sensiblement en hélice autour du deuxième organe filaire 67. Ici le premier organe filaire 65 est un brin multifilamentaire en PET présentant un titre égal à 110 tex et le deuxième organe filaire 67 est un brin mutifilamentaire en rayonne de 23 tex.

Les éléments filaires 66 comprennent ici deux organes filaires, le deuxième organe filaire étant sensiblement rectiligne et le premier organe filaire étant enroulé sensiblement en hélice autour du deuxième organe filaire. Ici le premier organe filaire est un brin multifilamentaire en PET présentant un titre égal à 110 tex et le deuxième organe filaire est un brin mutifilamentaire en rayonne de 23 tex.

Le deuxième tissu 28, représenté sur la figure 2, s'étend selon une première direction principale du deuxième tissu G2. Le deuxième tissu 28 comprend des éléments filaires 68, appelés éléments filaires de chaine, et des éléments filaires 70, appelés éléments filaires de trame. Les éléments filaires de chaine 68 du deuxième tissu 28 sont sensiblement parallèles entre eux et s'étendent selon une direction dite de chaine C2, sensiblement parallèle à la première direction principale du deuxième tissu G2. Les éléments filaires de trame 70 du deuxième tissu 28 sont sensiblement parallèles entre eux et s'étendent selon une direction dite de trame T2 et s'entrecroisent avec les éléments filaires de chaine 68. Les éléments filaires de chaine 68 s'étendent continûment sur toute la longueur du deuxième tissu 28.

Chaque élément filaire 68, 70, est ici, par exemple, un élément filaire textile.

Les éléments filaires 68 sont tous sensiblement identiques et sont ici un brin multifilamentaire en PET présentant un titre égal à 110 tex.

Les éléments filaires 70 sont tous sensiblement identiques et sont ici un brin multifilamentaire en PET présentant un titre égal à 167 tex.

Le panneau (10) comprend une structure de liaison comprenant des éléments filaires reliant le premier tissu (26) au deuxième tissu (28), chaque élément filaire comprenant au moins une portion filaire (74), dite hauban, s'étendant entre le premier et le deuxième tissu et reliant le premier tissu au deuxième tissu. Chaque élément filaire 32 s'étend alternativement du premier tissu 26 vers le deuxième tissu 28 et du deuxième tissu 28 vers le premier tissu 26 lorsqu'on se déplace le long de l'élément filaire porteur 32. Chaque élément filaire porteur 32 est ici un élément filaire porteur textile, réalisé en PET et de titre 55 tex.

Chaque élément filaire 32 comprend une portion filaire porteuse 74 s'étendant entre les premier et deuxième tissus 26, 28, notamment entre les faces internes 42 et 46. Chaque élément filaire porteur 32 comprend des première et deuxième portions filaires d'ancrage 76, 78 de l'élément filaire porteur 32 respectivement dans le premier tissu 26 et le deuxième tissu 28. Chaque première et deuxième portion filaire d'ancrage 76, 78 prolonge la portion porteuse 74 respectivement dans chaque premier tissu 26 et deuxième tissu 28. Chaque première et deuxième portion filaire d'ancrage 76, 78 est entrelacée respectivement avec chaque premier tissu 26 et deuxième tissu 28. Chaque première et deuxième portion filaire d'ancrage 76, 78 est enroulée au moins en partie autour respectivement d'au moins un premier élément filaire 64, 66 du premier tissu 26 et d'au moins un deuxième élément filaire 68, 70 du deuxième tissu 28. Ainsi, chaque portion filaire d'ancrage 76, 78 relie deux portions filaires porteuses 74 entre elles et chaque portion filaire porteuse 74 relie deux portion filaire d'ancrage 76, 78 entre elles.

En l'espèce, chaque première portion filaire d'ancrage 76 est enroulée au moins en partie autour d'au moins un élément filaire de trame 66 du premier tissu 26 et ici, de préférence, autour d'au moins deux éléments filaire de trame 66 adjacents selon la première direction principale du premier tissu G1. De façon analogue, chaque deuxième portion filaire d'ancrage 78 est enroulée au moins en partie autour d'au moins un élément filaire de trame 68 du deuxième tissu 28, de préférence autour d'au moins deux éléments filaire de trame 66 adjacents selon la première direction principale du deuxième tissu G2.

Chaque première et deuxième portion filaire d'ancrage 76, 78 s'étend selon une direction sensiblement parallèle à respectivement la première direction principale du premier et du deuxième tissu G1, G2.

Chaque première portion filaire d'ancrage 76 passe alternativement de la face 41 à la face 42 entre deux éléments filaires de trame 66 adjacents autour desquels la première portion filaire d'ancrage 76 s'enroule. De façon analogue, chaque deuxième portion filaire d'ancrage 78 passe alternativement de la face 46 à la face 49 entre deux éléments filaires de trame 68 adjacents autour desquels la deuxième portion filaire d'ancrage 78 s'enroule.

**Revendications**

1. Panneau comprenant :

• un premier tissu comprenant des éléments filaires (C1), dits de chaîne, sensiblement parallèles entre eux et s'étendant selon une direction dite de chaine, constituant une première direction principale du premier tissu, des éléments filaires (T1), dits de trame, sensiblement parallèles entre eux et s'étendant selon une direction dite de trame, constituant une deuxième direction principale du premier tissu et différente de la première direction principale du premier tissu ;

• un deuxième tissu comprenant des éléments filaires (C2), dits de chaîne, sensiblement parallèles entre eux et s'étendant selon une direction dite de chaine, constituant une première direction principale du deuxième tissu, des deuxièmes éléments filaires (T2), dits de trame, sensiblement parallèles entre eux et s'étendant selon une direction dite de trame, constituant une deuxième direction principale du deuxième tissu, différente de la première direction principale du deuxième tissu ;

• une structure de liaison comprenant n éléments filaires reliant le premier tissu au deuxième tissu, chaque élément filaire comprenant au moins une portion filaire, dite hauban, s'étendant entre le premier et le deuxième tissu et reliant le premier tissu au deuxième tissu, chaque hauban i ayant une longueur au repos $h_i$ et s'étendant d'un point d'attache au premier tissu vers un point d'attache au deuxième tissu ;

chaque hauban de la structure de liaison présente une longueur au repos sensiblement égale à la moyenne des longueurs au repos $\overline{h_m}$ des haubans, m représentant le nombre total de haubans de la structure de liaison, en ce que le premier et le deuxième tissus sont non déformables et en ce que le panneau comprend, entre la face interne du premier tissu et la face interne du deuxième tissu, un matériau de remplissage, ledit matériau de remplissage étant une mousse cimentaire, **caractérisé en ce que** la structure de liaison est telle qu'elle ne peut supporter à elle seule l'espacement entre les deux faces du panneau.

2. Panneau selon la revendication précédente dans lequel le premier et deuxième tissu comprennent, indépendamment l'un de l'autre, un matériau choisi parmi un polyester, un polyamide, une polycétone, un polyuréthane, une fibre naturelle, une fibre minérale et un assemblage de ces matériaux, de préférence choisi parmi un polyester, un polyamide, une polycétone, un polyuréthane, une fibre naturelle et un assemblage de ces matériaux, plus préférentiellement choisi parmi un polyester, une fibre naturelle et un assemblage de ces matériaux.

3. Panneau selon l'une quelconque des revendications précédentes dans lequel au moins un des tissus comprend un matériau ignifuge, par sa nature ou par un traitement d'ignifugation.

4. Panneau selon l'une quelconque des revendications précédentes dans lequel chaque élément filaire de la structure de liaison est textile.

5. Panneau selon la revendication précédente dans lequel chaque élément filaire de la structure de liaison est une fibre textile multi-filamentaire, chaque fibrille constituant la fibre textile présentant un diamètre compris entre 0,001 et 0,5 mm, préférentiellement compris entre 5 et 50 μm, préférentiellement compris entre 10 et 40 μm.

6. Panneau selon l'une quelconque des revendications 1 à 3 dans lequel chaque élément filaire de la structure de liaison est métallique.

7. Panneau selon l'une quelconque des revendications précédentes dans lequel la longueur au repos moyenne $\overline{h_m}$ des haubans est supérieure à 8 mm, de manière préférée comprise entre 10 et 2000 mm, préférentiellement comprise entre 10 et 1000 mm, préférentiellement comprise entre 10 et 500 mm, très préférentiellement comprise entre 30 et 100 mm, de manière très préférée comprise entre 40 et 70 mm.

8. Panneau selon l'une quelconque des revendications précédentes dans lequel au moins un des premier tissu et deuxième tissu, est agencé de sorte à être étanche au matériau de remplissage.

9. Assemblage comprenant au moins un panneau selon l'une quelconque des revendications 1 à 8.

10. Procédé de fabrication d'un panneau selon l'une quelconque des revendications 1 à 8 comprenant au moins les étapes suivantes :

• Disposer sur une surface un tissu tridimensionnel comprenant :

i. un premier tissu comprenant des éléments filaires (C1), dits de chaîne, sensiblement parallèles entre eux et s'étendant selon une direction dite de chaine, constituant une première direction principale du premier tissu, des éléments filaires (T1), dits de trame, sensiblement parallèles entre eux et s'étendant selon une direction dite de trame, constituant une deuxième direction principale du premier tissu et différente de la première direction principale du premier tissu ;

ii. un deuxième tissu comprenant des éléments filaires (C2), dits de chaîne, sensiblement parallèles entre eux et s'étendant selon une direction dite de chaine, constituant une première direction principale du deuxième tissu, des deuxièmes éléments filaires (T2), dits de trame, sensiblement parallèles entre eux et s'étendant selon une direction dite de trame, constituant une deuxième direction principale du deuxième tissu, différente de la première direction principale du deuxième tissu ;

iii. une structure de liaison comprenant n éléments filaires reliant le premier tissu au deuxième tissu, chaque élément filaire comprenant au moins une portion filaire, dite hauban, s'étendant entre le premier et le deuxième tissu et reliant le premier tissu au deuxième tissu, chaque hauban i ayant une longueur au repos $h_i$ et s'étendant d'un point d'attache au premier tissu vers un point d'attache au deuxième tissu, chaque hauban de la structure de liaison présente une longueur au repos sensiblement égale à la moyenne des longueurs au repos $\overline{h_m}$ des haubans, et en ce que le premier et le deuxième tissus sont non déformables

• injecter par au moins une extrémité dudit panneau entre la face interne du premier tissu et la face interne du deuxième tissu un matériau de remplissage, ledit matériau de remplissage étant une mousse cimentaire.

**Patentansprüche**

1. Platte, umfassend:

• ein erstes Gewebe, umfassend fadenförmige Elemente (C1), als Kettenelemente bezeichnet, die zueinander im Wesentlichen parallel sind und sich entlang einer sogenannten Kettenrichtung erstrecken, die eine erste Hauptrichtung des ersten Gewebes bildet, fadenförmige Elemente (T1), als Schusselemente bezeichnet, die zueinander im Wesentlichen parallel sind und sich entlang einer sogenannten Schussrichtung erstrecken, die eine zweite Hauptrichtung des ersten Gewebes bildet, die sich von der ersten Hauptrichtung des ersten Gewebes unterscheidet;
• ein zweites Gewebe, umfassend fadenförmige Elemente (C2), als Kettenelemente bezeichnet, die zueinander im Wesentlichen parallel sind und sich entlang einer sogenannten Kettenrichtung erstrecken, die eine erste Hauptrichtung des zweiten Gewebes bildet, fadenförmige Elemente (T2), als Schusselemente bezeichnet, die zueinander im Wesentlichen parallel sind und sich entlang einer sogenannten Schussrichtung erstrecken, die eine zweite Hauptrichtung des zweiten Gewebes bildet, die sich von der ersten Hauptrichtung des zweiten Gewebes unterscheidet;
• eine Verbindungsstruktur, die n fadenförmige Elemente umfasst, die das erste Gewebe mit dem zweiten Gewebe verbinden, wobei jedes fadenförmige Element mindestens einen fadenförmigen Abschnitt, als Abspannung bezeichnet, umfasst, der sich zwischen dem ersten und dem zweiten Gewebe erstreckt und das erste Gewebe mit dem zweiten Gewebe verbindet, wobei jede Abspannung i eine Länge im unbeanspruchten Zustand $h_i$ aufweist und sich von einem Befestigungspunkt an dem ersten Gewebe zu einem Befestigungspunkt an dem zweiten Gewebe erstreckt;

wobei jede Abspannung der Verbindungsstruktur eine Länge im unbeanspruchten Zustand aufweist, die im Wesentlichen gleich dem Mittelwert der Längen im unbeanspruchten Zustand $\overline{h_m}$ der Abspannungen ist, m die Gesamtanzahl Abspannungen der Verbindungsstrukturen darstellt, dadurch, dass das erste und das zweite Gewebe nicht verformbar sind und dadurch, dass die Platte, zwischen der Innenseite des ersten Gewebes und der Innenseite des zweiten Gewebes, ein Füllmaterial umfasst, wobei das Füllmaterial ein Zementschaum ist, **dadurch gekennzeichnet, dass** die Verbindungsstruktur derart ist, dass sie allein nicht den Zwischenraum zwischen den beiden Seiten der Platte halten kann.

2. Platte nach dem vorhergehenden Anspruch, wobei das erste und das zweite Gewebe unabhängig voneinander ein Material umfassen, das aus einem Polyester, einem Polyamid, einem Polyketon, einem Polyurethan, einer Naturfaser, einer Mineralfaser und einem Verbund aus diesen Materialien ausgewählt ist, bevorzugt aus einem Polyester, einem Polyamid, einem Polyketon, einem Polyurethan, einer Naturfaser und einem Verbund aus diesen Materialien ausgewählt ist, noch bevorzugter aus einem Polyester, einer Naturfaser und einem Verbund aus diesen Materialien ausgewählt ist.

3. Platte nach einem der vorhergehenden Ansprüche, wobei mindestens eines der Gewebe ein von Natur aus oder durch eine Flammschutzbehandlung feuerfestes Material beinhaltet.

4. Platte nach einem der vorhergehenden Ansprüche, wobei jedes fadenförmige Element der Verbindungsstruktur textil ist.

**5.** Platte nach dem vorhergehenden Anspruch, wobei jedes fadenförmige Element der Verbindungsstruktur eine textile Multifilamentfaser ist, wobei jede Fibrille, aus der die textile Faser besteht, einen Durchmesser zwischen 0,001 und 0,5 mm, bevorzugt zwischen 5 und 50 $\mu$m, bevorzugt zwischen 10 und 40 $\mu$m aufweist.

**6.** Platte nach einem der Ansprüche 1 bis 3, wobei jedes fadenförmige Element der Verbindungsstruktur metallisch ist.

**7.** Platte nach einem der vorhergehenden Ansprüche, wobei die mittlere Länge im unbeanspruchten Zustand $\overline{h_m}$ der Abspannungen größer als 8 mm ist, vorzugsweise zwischen 10 und 2000 mm liegt, bevorzugt zwischen 10 und 1000 mm liegt, bevorzugt zwischen 10 und 500 mm liegt, sehr bevorzugt zwischen 30 und 100 mm liegt, auf ganz besonders bevorzugte Weise zwischen 40 und 70 mm liegt.

**8.** Platte nach einem der vorhergehenden Ansprüche, wobei von dem ersten Gewebe und zweiten Gewebe mindestens eins derart angeordnet ist, dass es gegenüber dem Füllmaterial undurchlässig ist.

**9.** Anordnung, umfassend mindestens eine Platte nach einem der Ansprüche 1 bis 8.

**10.** Verfahren zur Herstellung einer Platte nach einem der Ansprüche 1 bis 8, das mindestens folgende Schritte umfasst:

• Anordnen eines dreidimensionalen Gewebes auf einer Fläche, umfassend:

i. ein erstes Gewebe, umfassend fadenförmige Elemente (C1), als Kettenelemente bezeichnet, die zueinander im Wesentlichen parallel sind und sich entlang einer sogenannten Kettenrichtung erstrecken, die eine erste Hauptrichtung des ersten Gewebes bildet, fadenförmige Elemente (T1), als Schusselemente bezeichnet, die zueinander im Wesentlichen parallel sind und sich entlang einer sogenannten Schussrichtung erstrecken, die eine zweite Hauptrichtung des ersten Gewebes bildet, die sich von der ersten Hauptrichtung des ersten Gewebes unterscheidet;
ii. ein zweites Gewebe, umfassend fadenförmige Elemente (C2), als Kettenelemente bezeichnet, die zueinander im Wesentlichen parallel sind und sich entlang einer sogenannten Kettenrichtung erstrecken, die eine erste Hauptrichtung des zweiten Gewebes bildet, fadenförmige Elemente (T2), als Schusselemente bezeichnet, die zueinander im Wesentlichen parallel sind und sich entlang einer sogenannten Schussrichtung erstrecken, die eine zweite Hauptrichtung des zweiten Gewebes bildet, die sich von der ersten Hauptrichtung des zweiten Gewebes unterscheidet;
iii. eine Verbindungsstruktur, die n fadenförmige Elemente umfasst, die das erste Gewebe mit dem zweiten Gewebe verbinden, wobei jedes fadenförmige Element mindestens einen fadenförmigen Abschnitt, als Abspannung bezeichnet, umfasst, der sich zwischen dem ersten und dem zweiten Gewebe erstreckt und das erste Gewebe mit dem zweiten Gewebe verbindet, wobei jede Abspannung i eine Länge im unbeanspruchten Zustand $h_i$ aufweist und sich von einem Befestigungspunkt an dem ersten Gewebe zu einem Befestigungspunkt an dem zweiten Gewebe erstreckt, wobei jede Abspannung der Verbindungsstruktur eine Länge im unbeanspruchten Zustand aufweist, die im Wesentlichen gleich dem Mittelwert der Längen im unbeanspruchten Zustand $\overline{h_m}$ der Abspannungen ist, und dadurch, dass das erste und das zweite Gewebe nicht verformbar sind,

• über mindestens ein Ende der Platte zwischen der Innenseite des ersten Gewebes und der Innenseite des zweiten Gewebes Einspritzen eines Füllmaterials, wobei das Füllmaterial ein Zementschaum ist.

## Claims

**1.** Panel comprising:

• a first woven fabric comprising filamentary elements (C1), referred to as warp elements, which are substantially parallel to one another and extend in a direction referred to as the warp direction, which constitutes a first main direction of the first woven fabric, filamentary elements (T1), referred to as weft elements, which are substantially parallel to one another and extend in a direction referred to as the weft direction, which constitutes a second main direction of the first woven fabric, different from the first main direction of the first woven fabric;
• a second woven fabric comprising filamentary elements (C2), referred to as warp elements, which are substantially parallel to one another and extend in a direction referred to as the warp direction, which constitutes a first main direction of the second woven fabric, second filamentary elements (T2), referred to as weft elements, which are substantially parallel to one another and extend in a direction referred to as the weft direction, which constitutes a second main direction of the second woven fabric, different from the first main direction of the second woven fabric;

• a linking structure comprising n filamentary elements linking the first woven fabric to the second woven fabric, each filamentary element comprising at least one filamentary portion, referred to as a stay, extending between the first and second woven fabrics and linking the first woven fabric to the second woven fabric, each stay i having an at-rest length $h_i$ and extending from a point of attachment to the first woven fabric to a point of attachment to the second woven fabric;

each stay of the linking structure has an at-rest length that is substantially equal to the mean $\overline{h_m}$ of the at-rest lengths of the stays, m representing the total number of stays of the linking structure, in that the first woven fabric and the second woven fabric are non-deformable and in that the panel comprises, between the internal face of the first woven fabric and the internal face of the second woven fabric, a filling material, said filling material being a cement-based foam, **characterized in that** the linking structure is such that it is unable by itself to support the spacing between the two faces of the panel.

2. Panel according to the preceding claim, wherein the first and second woven fabrics comprise, independently of one another, a material selected from a polyester, a polyamide, a polyketone, a polyurethane, a natural fibre, an inorganic fibre and a collection of these materials, preferably selected from a polyester, a polyamide, a polyketone, a polyurethane, a natural fibre and a collection of these materials, and more preferentially selected from a polyester, a natural fibre and a collection of these materials.

3. Panel according to either one of the preceding claims, wherein at least one of the woven fabrics comprises a material that is fire-retardant either through its nature or by having a fire-retardant treatment.

4. Panel according to any one of the preceding claims, wherein each filamentary element of the linking structure is a textile element.

5. Panel according to the preceding claim, wherein each filamentary element of the linking structure is a multifilament textile fibre, each fibril that makes up the textile fibre having a diameter comprised between 0.001 and 0.5 mm, preferentially comprised between 5 and 50 $\mu$m, and preferentially comprised between 10 and 40 $\mu$m.

6. Panel according to any one of Claims 1 to 3, wherein each filamentary element of the linking structure is a metallic element.

7. Panel according to any one of the preceding claims, wherein the mean at-rest length $\overline{h_m}$ of the stays is greater than 8 mm, preferably comprised between 10 and 2000 mm, preferentially comprised between 10 and 1000 mm, preferentially comprised between 10 and 500 mm, highly preferentially comprised between 30 and 100 mm, and as a very strong preference, comprised between 40 and 70 mm.

8. Panel according to any one of the preceding claims, wherein at least one of the first woven fabric and second woven fabric is arranged in such a way as to be impervious to the filling material.

9. Assembly comprising at least one panel according to any one of Claims 1 to 8.

10. Method for manufacturing a panel according to any one of Claims 1 to 8, comprising at least the following steps:

• Laying down on a surface a three-dimensional woven fabric comprising:

i. a first woven fabric comprising filamentary elements (C1), referred to as warp elements, which are substantially parallel to one another and extend in a direction referred to as the warp direction, which constitutes a first main direction of the first woven fabric, filamentary elements (T1), referred to as weft elements, which are substantially parallel to one another and extend in a direction referred to as the weft direction, which constitutes a second main direction of the first woven fabric, different from the first main direction of the first woven fabric;

ii. a second woven fabric comprising filamentary elements (C2), referred to as warp elements, which are substantially parallel to one another and extend in a direction referred to as the warp direction, which constitutes a first main direction of the second woven fabric, second filamentary elements (T2), referred to as weft elements, which are substantially parallel to one another and extend in a direction referred to as the weft direction, which constitutes a second main direction of the second woven fabric, different from the first main direction of the second woven fabric;

iii. a linking structure comprising n filamentary elements linking the first woven fabric to the second woven fabric, each filamentary element comprising at least one filamentary portion, referred to as a stay, extending between the first and second woven fabrics and linking the first woven fabric to the second woven fabric, each stay i having an at-rest length $h_i$ and extending from a point of attachment to the first woven fabric to a point of attachment to the second woven fabric, each stay of the linking structure has an at-rest length that is substantially equal to the mean $\overline{h_m}$ of the at-rest lengths of the stays, and in that the first woven fabric and the second woven fabric are non-deformable;

• Injecting a filling material between the internal face of the first woven fabric and the internal face of the second woven fabric, via at least one end of said panel, said filling material being a cement-based foam.

[Fig 1]

[Fig 2]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20170044766 A
- WO 2019197319 A
- US 20100233417 A
- WO 2015053842 A
- WO 2015187826 A
- DE 2855194